# EUROPEAN PATENT SPECIFICATION

(11) **EP 3 093 611 B1**
(45) Date of publication and mention of the grant of the patent: **03.11.2021**
(21) Application number: 16169727.1
(22) Date of filing: 13.05.2016
(51) Int. Cl.: G01B 11/245, G01B 11/27

(54) **MEASURING METHOD AND DEVICE TO MEASURE THE STRAIGHTNESS ERROR OF BARS AND PIPES**
VORRICHTUNG UND VERFAHREN ZUR MESSUNG DES GERADHEITSFEHLERNS VON STANGEN ODER ROHREN
MESURE ET DISPOSITIF DE MESURE DE L'ERREUR DE RECTITUDE DE BARRES ET TUYAUX

(30) Priority: 15.05.2015 IT BS20150085
(43) Date of publication of application: 16.11.2016
(73) Proprietor: Q-TECH S.r.l., 25020 Flero (BS) (IT)
(72) Inventor: FUMAGALLI, Luca, 25086 REZZATO (BS) (IT); GREGORELLI, Erika, 25086 REZZATO (BS) (IT); TOMASSINI, Paolo, 25086 REZZATO (BS) (IT)
(74) Representative: Sangiacomo, Ines

(56) References cited:
- EP-A1- 1 447 645
- EP-A1- 2 803 942
- WO-A1-96/34251
- WO-A1-2006/138220
- JP-A- S5 761 907
- JP-A- S6 171 307
- JP-A- S59 188 507
- JP-A- 2005 300 298
- None

## Description

### Field of the Invention

The present invention generally concerns the field of measuring devices and in particular concerns a method and a device to measure straightness errors of elongated-shape elements, such as, typically, rods, bars or pipes. Preferably, reference is made to metal elements and the measurement is carried out during the producing process.

### State of the art

In the field of bar production, in particular bars made of metal material and in particular in the field of brass drawing, methods for measuring the straightness of the finished product and determining a possible straightness error of the bar, also named *deflection,* are known. In other words, if any straightness errors are on the bar under examination, i.e. the latter is not straight but has one or more bends along its longitudinal axis, such errors must be detected and measured to determine whether the bar is in compliance with predetermined standards or not. According to a traditional method, the straightness error is measured by placing the bar under examination on two bearings, by making the bar rotate over 360° and by measuring with a comparator the maximum camber change of the point placed on the upper generatrix of a selected section. Then, the measured value must be divided by two. The measuring base is given by the distance from the closest bearing. Although this technique is very accurate, it is very time-consuming and therefore not suitable to be used in a production line where cycle times are too short; in particular in the current processing plants, for example in the brass field, hanks are processed at a speed of about 60-120 m/min, producing finished bars having length of 3 to 5 m, at a rate of one bar every 1-3 seconds. On the other hand, the above described technique requires longer measurement times and is therefore traditionally used only for during-production sample checks.

Other systems have been developed over time for in-line measurement of the material waviness; these systems use one or more laser sensors measuring the distance of the material from a known reference plane and thus to determine some waviness indexes of the material itself. However, such systems are designed to detect the waviness of the material before cutting the latter into bars and become poorly usable, or even unusable, as throughput rate increases, due to the speed and the transport system that cause deformations and swinging of the material itself; in addition, as such systems measure the material when is not yet cut into bars and subjected to a longitudinal tensile force, therefore they do not consider the effect of the cutting process on the finished product and are not able to inform about the effect of the residual stress in the material, which can cause the deformation of the bar as a result of the cutting process.

Other measurement systems to evaluate the curvature of the material use multiple weight sensors coupled to a suitable rolling plane, but have the disadvantage of being usable only under well-controlled measuring conditions, being hardly adaptable to different sizes of the bars and frequently involving significant measurement errors caused, for example, by frictions and unpredictable rollings of the material; therefore, also these systems are poorly effective in in-line dimensional checks. Moreover, the values measured by these systems, even though related to the straightness error of the material, anyway are indirect measurements that are not able to provide the real accurate measure of the straightness error.

Further devices using optical sensors have been proposed, but they do not provide satisfactory results in terms of precision and accuracy of the measurement.

For example, the document WO2006138228 A1 relates to a measuring device to measure straightness errors of bars, in which a sequence of pairs of images is acquired next to at least three different sections of a bar, in order to estimate the position of the center of each section. Preferably, the directions in which the pair of images is acquired are orthogonal, or anyway angled, with respect to each other. In any case, a pair of sensors at each bar section where the measurement has to be taken is required, so that a large number of measure sensors are needed, at least six sensors for a minimum arrangement to obtain a not particularly accurate measurement. Furthermore, having only two measurements per each section, a particularly accurate evaluation of the actual position of the center of the analyzed bar section is not possible.

The document JP S61 71307 A relates to a system for measuring the curvature of a material to be measured, cantileverly supported by a pair of rollers by means of at least three pairs of distance detectors arranged at predetermined distances in the longitudinal direction of the material. The curvature of the material to be measured is calculated based on the distances detected by these sensors. Since the pipe is cantileverly held, this can cause it to undergo further bending due to its weight, still having the same problems of the device according to the document WO2006138228 A1. Furthermore, such system can measure straightness defects only along one direction.

WO 96/34251 A1 discloses a method and an apparatus for measuring the characteristic quantities of a log or similar longitudinal object.

Finally, the document EP 1 4447 645 A1 relates to a device for checking the straightness of elongated elements, such as bars, based on a comparison of images detected by at least two detectors. To operate such a system, the detected images must be compared to images acquired by the same device in the case of a reference bar, which is assumed without straightness errors. Therefore, the system is not able to detect whether the reference bar is effectively without straightness errors; additionally, such a system has poor flexibility, since to be able to evaluate a bar, an image of a corresponding reference bar must be necessarily provided.

### Object And Summary Of The Invention

The present invention was conceived exactly with the purpose of overcoming the above described drawbacks of the prior art, by proposing a method and a related device to detect and measure the straightness error of elongated elements once cut into bars, rods, pipes and the like of variable length, to be used directly in production lines for example drawing lines, rolling lines, extrusion lines, etc.

This object is achieved through a measuring device to measure straightness errors of elongated elements, such as bars, rods, pipes, etc. named bars, according to claim 1, for the sake of simplicity.

In particular, the measuring device comprises a surface plate on which a bar is arranged in static equilibrium by virtue of its own straightness defect, detecting means to detect the development of the longitudinal axis of the bar and a controlling and processing unit to control and process data acquired by said detecting means. The detecting means are designed to acquire the coordinates of a plurality of points of the bar surface next to at least three cross sections and the controlling and processing unit is programmed to calculate the position of the longitudinal axis of the bar next to said three sections, starting from the coordinates of the points.

In fact, when the bar is arranged in a plane, in order to reach a position of stable equilibrium it tends to position itself such that a non-straightness defect of its longitudinal axis lies on the surface plate.

Preferably, the detecting means may be positioned on the opposite side with respect to the surface plate and comprise at least one optical sensor able to acquire the coordinates of the points next to three different sections of the bar along its longitudinal axis; or at least three optical sensors are provided, each arranged next to a different section of the bar along its longitudinal axis. The sensors may be stationary or movable in parallel to the surface plate and the longitudinal axis of the bar. Preferably, three movable sensors are provided in order to detect more effectively the bar geometry. Since the detection means are suitably positioned on the opposite side of the bar with respect to the surface plate, the straightness error, in the form of curvature of the bar, can be seen and therefore detected, thereby allowing to determine the deviation of the longitudinal axis of the bar from a straight line. Therefore, the optical sensors are placed above the bar so that their beam hits an upper part of the bar, when the latter is in the position of static equilibrium on the surface plate.

Optical sensors fall into the class of optical triangulation systems using laser or other light type, or any other measuring sensors able to detect the two-dimensional and/or tridimensional geometric profile of the bar, such as measuring systems projecting structured light, time of flight cameras, stereoscopic vision systems, etc.

In order to linearly move the optical sensors at least one track is provided, along which the movable sensors can be translated to known positions by means of respective actuators driven by the controlling unit. The track can act as a support for the sensors even in the case of stationary sensors. Advantageously, the supporting and translation track can be moved by means of proper motorization within a plane parallel to the surface plate so as to position itself above the surface plate where the bar positions itself each time.

The surface plate is combined with a rolling plane, where the bars roll, to force the bars, after they initially rolled, to stop in a position of stable equilibrium on the surface plate, the lying plane of the longitudinal axis of each bar being parallel to the surface plate itself, so that the straightness error of each bar lies coplanar with the surface plate. Both the surface plate and the rolling plane can be defined either by a single surface or a plurality of supports.

The surface plate is defined by at least two supports each mounted so as to tilt on a respective fulcrum. Each support has at least two bearing elements placed on opposite sides with respect to the fulcrum. This arrangement having tilting supports and provided with a restricted number of bearing points, for example four in the case of two supports each having two bearing points, allows to minimize the static deformation of the bar caused by its own weight.

Advantageously and in order to obtain an optimal surface plate depending on the dimension of the bar to be measured, each support can be provided with movement means to move it in order to vary the distance between the supports and thus between the fulcrums; additionally, also the distance between the bearing elements of each support can be changed by respective actuating means.

Advantageously, the measuring device can be arranged in line with a bar production plant. In this case, the controlling and processing unit is provided with means to interface with the production plant in order to feedback adjust the production parameters on the basis of the straightness error each time detected on the bars.

A further aspect of the invention concerns a method according to claim 9 to measure straightness errors of elongated-shape elements, named bars, by the above mentioned device that involves positioning a bar on a surface plate so as to be arranged in a position of static equilibrium and its longitudinal axis lies on a plane parallel to the surface plate; detecting, through the detecting means, the coordinates of a plurality of points of the surface of the bar next to at least three cross sections thereof; calculating the coordinates of the longitudinal axis of the bar next to at least three cross sections, on the basis of the detected coordinates; interpolating the so calculated coordinates of the axis to determine the straightness error of the bar as an axis offset from one or more reference lines.

In more detail, in order to calculate the coordinates of the longitudinal axis of the bar next to the at least three cross sections, a least-squares interpolation of coordinates of detected points is carried out, which are then compared with a bar reference model to determine the coordinates of the center of each cross section, corresponding to the position of the bar axis in at least three cross sections; then, the straightness error is calculated as a distance between two parallel lines, one of them passing through the centers of two cross sections and the other one passing through the center, in-between the preceding two centers, of a third cross section. The greater the number of centers, i.e. the greater the number of the detected cross sections of the bar, the greater the accuracy in reproducing the pattern of the bar longitudinal axis and the precision in calculating the error. For example, the coordinates of the centers can be used to determine the least-squares line best interpolating the sequence of the centers; the maximum straightness error of the bar is determined as the maximum offset of the real center coordinates detected by the device with respect to such theoretical line. The straightness error can be measured over the entire length of the bar, or only on one or more portions of interest; in fact, the analysis can be iterated several times on adjacent portions of the bar to determine a local non-linearity, as required by some sector regulations.

Advantageously, the bars can be classified on the basis of the amount of the measured straightness error and, in case, they are unloaded from the surface plate on different lines on the basis of the error amount.

### Brief Description Of The Drawings

However, the invention will be further illustrated in the following description made with reference to the accompanying exemplary and not limiting drawings, in which:
figure 1 shows a block diagram of the measuring device;
figure 2 shows a detail of a possible embodiment of the measuring system;
figure 2a shows a top view of only the bar positioned on a surface plate;
figure 2b shows a perspective view of only the surface plate according to a preferred embodiment;
figures 2c and 2d show a top view and a side view, respectively, of a portion of the surface plate of figure 2b;
figure 2e shows a sectional view of a portion of the surface plate according to arrows A-A in figure 2c;
figure 3 shows a block diagram of the measuring cycle;
figure 4 shows an example of a first calculating step of the straightness error; and
figure 5 shows an example of a second calculating step of the straightness error.

### Detailed Description Of The Invention

In said drawings, a measuring device to measure straightness errors of an elongated element such as a bar, rod, pipe and the like, hereinafter simply named bar 2, is globally referred to with the numeral 1. The bar may have a section of any geometry, such as circular, hexagonal, etc., any size and can be made of any material, preferably a metal material.

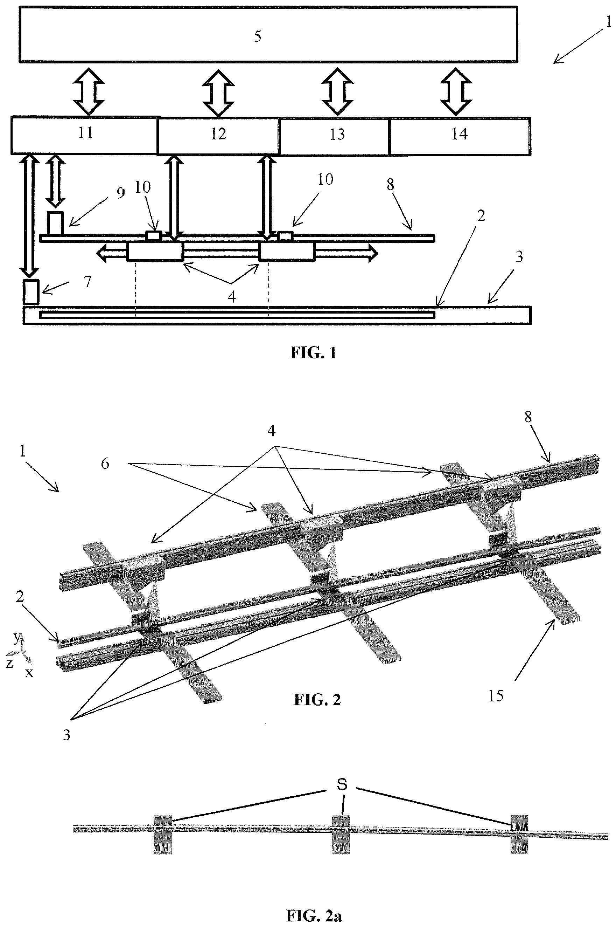

As schematically shown in fig. 1, the measuring device 1 comprises positioning means to position the bar on a surface plate 3, detecting means 4 to acquire the profile of the bar next to at least three different cross sections Z₁, Z₂, ..., Zₙ along its longitudinal direction and a controlling and processing unit 5 provided with program means, to receive and process data acquired by the detecting means.

The positioning means to position the bar comprise a rolling plane 6 combined with the surface plate, having the function of allowing the bars coming from a production plant to roll thereon so that, after an initial rolling step, they stop in a position of stable equilibrium in which their straightness defect lies level with the surface plate. Actually, as a bar bended in its longitudinal direction rolls, it will always stop with its bended surface in contact with the surface plate, thereby allowing to detect the bended surface from a position opposite to the surface plate, as shown in fig. 2a.

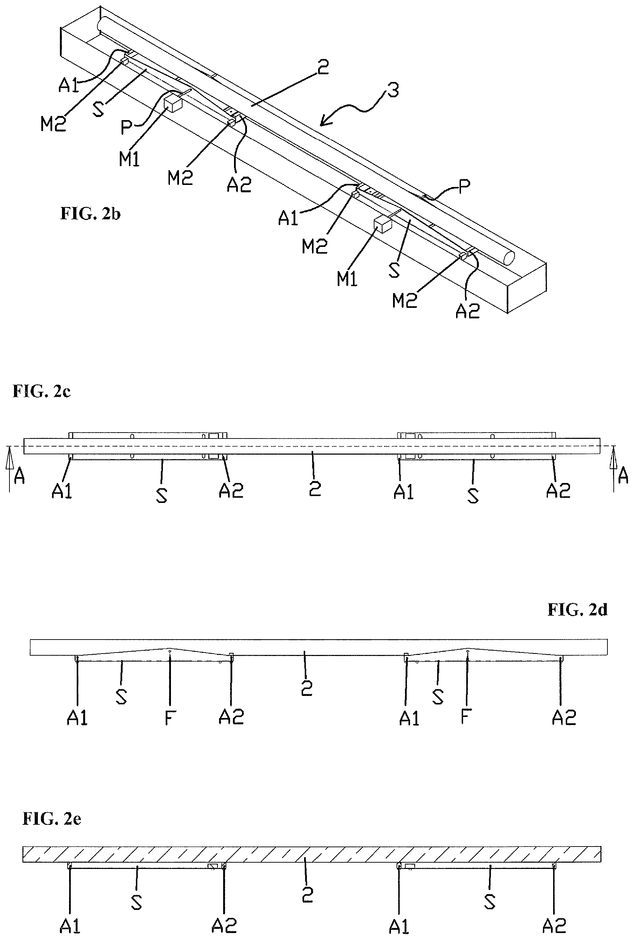

Both the rolling plane 6 and the surface plate 3 can be formed by a single surface or a plurality of supports S, as shown in figs. 2 and 2a.

In order to minimize the static deformation of the bar caused by its own weight, a surface plate 3 comprising at least two supports S possibly fixed, should be properly used, as in the example of figs. 2 and 2a, or preferably mounted so as to tilt and be able to rotate around their own fulcrum F, on a pivot pin P. Each support is provided with at least two respective bearing elements A1, A2 positioned on opposite parts with respect to the respective fulcrum and having the bar 2 lying thereon; in the case of two supports, each provided with two bearing elements, there will be four bearing points in all, as shown in figures. Each tilting support is statically balanced with respect to its own fulcrum.

The static deformation of the bar can be minimized by optimizing, depending on the size of the bar, the distances between the fulcrums of the two supports and therefore between the supports themselves, and the distances of each bearing element from the respective fulcrum, the deformation resulting up to twelve times less than what obtained in case of two non-tilting supports.

For this reason, in addition to the tilting supports, the device may be provided with first movement means M1 combined with each support of the surface plate 3 in order to move it, so as to change the distance among the fulcrums F of different supports and, therefore, the distance among the supports, and with second movement means M2 to move the bearing elements A1 and A2 away from, or closer to, the respective fulcrum. Program means control the first and second movement means and are set so as to cause the supports and /or the respective bearing elements to move on the basis of the dimensional characteristics of the bar each time to be measured.

The measured straightness error, hereinafter called deflection, can lie in the space without distinction in one of the three directions, once in a plane and once in another, regardless of the position of static equilibrium of the bar. In the case of fixed surface plates and if the bar scanning is not of tridimensional type, due to the straightness defect of the bar, the deviation could always lie parallel to the bearing plane thereby being measured exclusively in one plane.

By using a surface plate of the above described type, together with the scanning performed by triangulation sensors which provide a tridimensional geometric profile of the object and thus detect the entire geometric section of the bar, it is therefore possible to provide a piece of information about a deflection measure, which can be in one of the various planes, not only in the bearing one, so that the measuring system to measure the deflection of pipes and bars according to the present invention becomes extremely reliable and accurate.

In order to precisely determine the mutual position of the bar with respect to the supporting plate, the system may comprise an additional sensor, for example a laser sensor - not shown - which allows to georeference and extremely accurately calibrate all the elements of the system.

The surface plate may be provided with suitable electric/pneumatic actuators 7 for loading and/or unloading the bars.

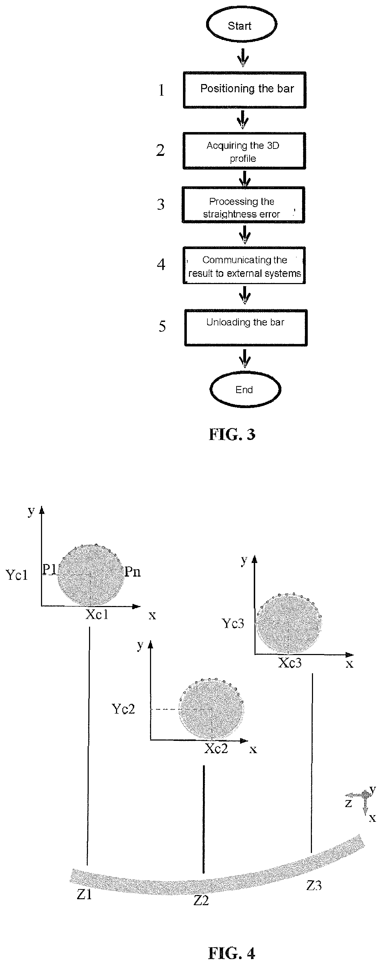

The detecting means 4 are adapted to acquire the coordinates of a plurality of points P₁, P₂, ..., Pₙ of the bar surface next to each of at least three cross sections Z₁, Z₂, ..., Zₙ of the bar itself. In other words, the detecting means 4 acquire a respective plurality of points P₁, P₂, ..., Pₙ of the surface of each cross section Z₁, Z₂, ..., Zₙ of the bar, as shown in fig. 4.

For this purpose, the detecting means may comprise at least one movable optical sensor to acquire the coordinates of points of the bar surface next to at least three cross sections, or at least three optical sensors each positioned next to a respective cross section Z₁, Z₂, ..., Zₙ. These optical sensors may be mounted so as to be stationary or movable parallel to the surface plate along the direction of the longitudinal axis of the bar. Each optical sensor is positioned on the opposite side of the bar with respect to the surface plate, i.e. above the bar and facing the same.

Preferably, there are three optical sensors 4 each movable parallel to the surface plate 3 so as to be able to acquire the coordinates of the surface points of a plurality of cross sections.

The optical sensors are selected in the class of optical triangulation systems using laser or other light type, or else any other measuring sensor able to detect the two-dimensional and/or tridimensional geometric profile of the bar, such as for example measuring systems projecting structured light, or time of flight cameras, or stereoscopic vision systems, etc.

The measuring device is provided with a track 8 having at least one optical sensor integrally fixed thereto. Preferably, the track can be translated by suitable motorization means 9 along a direction substantially orthogonal to the longitudinal direction of the bar, so as to position the sensors 4 next to the bar after the latter reached the position of static equilibrium on the supporting plane 2.

Each optical sensor can translate along the track 8 by means of respective actuators 10 controlled by the controlling and processing unit 5 in order to displace the sensors along the track longitudinally to the bar. Preferably, a single track is provided along which a single sensor translates, or along which each sensor translates in predetermined positions. Otherwise each optical sensor may be provided with a track.

The controlling and processing unit 5 is therefore able to interface and exchange data with a motor driving system 11 in order to manage the actuators 7, 10 and the motorization means 9 of the track, with a communicating and controlling system 12 to control the detecting means 4, with an operator interface 13 possibly comprising a panel allowing the users to interact therewith, and with an interface system 14 to exchange data with the production plant of the bars - not shown.

Finally, the device comprises means 15 for unloading the bar once the detection is completed.

The measuring system, as a whole, is able to process the coordinates of the detected points in order to deduce information about the straightness error of the bar and communicate this result to the production plant to possibly discard bars and/or control any feedback loops for processing successive bars and/or control possible processing systems downstream of the measuring device, the processing systems being designed to straighten the bar based on the calculated error.

In order to allow all the elements of the system to be properly georeferenced, the position of the reference plate 3 with respect to the track 8 for supporting and sliding the optical sensors is calibrated during the producing step of the device.

The invention also relates to a measuring method to measure straightness errors of bars, by means of the above described device 1.

Each measuring cycle carried out to measure a bar is depicted in the diagram of figure 3 and can be described as follows: the measuring cycle starts positioning the bar 2 on the surface plate 3, after that the controlling and processing unit 5 controls all the required devices, in particular the motor drive system and the optical sensors, to detect the tridimensional geometry of the bar placed on the surface plate; the thus acquired geometrical data, i.e. the coordinates of the plurality of points P₁, P₂, .. Pₙ, are processed by the controlling and processing unit 5 to calculate the straightness error of the bar and communicate this result to external systems for the later steps of discarding/rectifying the detected bar. The cycle ends unloading the bar from the surface plate to carry on with a possible measurement cycle of a next bar.

The non-straightness defect is processed starting from the geometrical data of each section **Z₁, Z₂,** ... **Zn,** as acquired by the optical sensors. The real calculation process includes two steps: determining the axis of the bar and actually calculating the straightness error.

In particular, as schematically shown in figure 4, in the first step a set of measurement points **P₁, P₂,** ... **Pn** are provided per each cross section; these points are used to perform a least-squares interpolation with a reference model of the bar section, in the example shown a circumference, so as to determine the coordinates **X_{c}, Y_{c}** of the center **C₁, C₂,** ..., **Cₙ** of each cross section. The number of sections used can vary from a minimum of three sections up to a higher number in order to improve the accuracy of the measurement, according to the available measurement time, depending on the bar production rate.

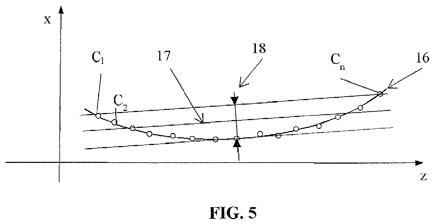

Figure 5 shows an example of the positions of the centers **C₁, C₂,** ..., **Cₙ** of the cross sections detected in a Cartesian reference system X, Z associated with the surface plate.

In the second step, the coordinates of the centers **X_{c}, Y_{c}** are analyzed for each center in order to determine the offset of the detected bar from straightness.

For practical purposes, this process can be carried out by analyzing the displacement of the coordinates of the bar center in the plane X, Z separately from that in the plane Y, Z orthogonal to the surface plate. Figure 5 shows how this analysis is carried out for example in the plane X, Z, which structurally should include the greatest error.

The envelope of the coordinates of the centers 16 shows the real linear development of the bar in the space; starting from such an envelope, the straightness error can be determined by applying different definitions, as required by different sector standards and/or regulations.

For example, the coordinates of the centers **X_{c}, Z_{c}** in the plane **X, Z** can be used to determine the least-squares line 17 best interpolating the sequence of the centers; it is then possible to determine the maximum offset of the actual coordinates of the centers, as detected by the measuring device, with respect to this theoretical straight line and thereby determine the maximum straightness error 18 of the bar over the entire length or only on one or more portions of interest, as the maximum distance between the detected heights of the centers and the line itself; in fact, the analysis can be iterated several times on adjacent bar portions of any length to determine a local non-linearity, as required by some sector regulations.

However, different definitions of straightness error can be used, as required by different application fields; for example, such error can be determined by interpolating the centers to a theoretical arc of circle, then determining some invariants of this arc, such as for example the maximum deflection normalized to the bar length or the square of the length of the bar, as provided by the standard practice in some fields of application (e.g. provision of brass bars).

Finally, the controlling and processing unit is programmed to classify the bars depending on the amount of the measured straightness error and, in case, to unload them from the surface plate on different lines on the basis of the error amount.

## Claims

1. Measuring device (1) to measure straightness errors of elongated-shape elements (2), named bars, comprising a surface plate (3) on which a bar is arranged in static equilibrium, detecting means (4) to detect the development of the longitudinal axis of the bar, a controlling and processing unit (5) to control and process data acquired by said detecting means,
wherein said detecting means (4) comprise one or more sensors to acquire the coordinates of a plurality of points (P₁, P₂, ..., Pₙ) of the bar surface of each of at least three cross sections (Z₁, Z₂, ..., Zₙ) and said controlling and processing unit (5) is programmed to calculate the position of the longitudinal axis of the bar next to said three sections, starting from the coordinates of said plurality of points, and to determine the possible straightness error,
**characterized in that** the surface plate (3) comprises at least two supports (S), each mounted on a respective fulcrum (F) so as to tilt and having at least two bearing elements (A1, A2) on opposite sides with respect to the respective fulcrum (F) to minimize the static deformation of the bar caused by its own weight.

2. Measuring device according to claim 1, wherein the detecting means (4) comprise:
- at least one optical sensor and means to position it next to at least three different sections of the bar along the longitudinal axis thereof; or else
- at least three optical sensors each arranged next to a different section of the bar along the longitudinal axis thereof, said sensors being stationary or movable in a direction substantially parallel to the longitudinal axis of the bar.

3. Device according to claim 1 or 2, wherein the optical sensors detecting the two-dimensional and/or tridimensional geometrical profile of the bar are selected from: optical triangulation lasing sensors, measuring sensors projecting structured light, time of flight cameras, and stereoscopic vision systems.

4. Device according to one of the preceding claims, comprising movement means to move sensors which, in their turn, comprise:
- at least one track (8) along which the movable sensors can be translated, and
- actuators (10) driven by the controlling unit and intended for the movement of the movable sensors to known positions along the track.

5. Device according to one of the preceding claims, wherein each support of the surface plate (3) is combined with first movement means (M1) for varying the distance among the supports (S) and wherein the bearing elements of each support are combined with respective second movement means (M2) for varying the distance between each bearing element and the respective fulcrum, said first and second movement means (M1, M2) being controlled by program means for respectively varying the distance among the supports (s) and the distance of the bearing elements (A1, A2) with respect to the respective fulcrum (F) on the basis of the dimensional characteristics of the bar.

6. Device according to one of the preceding claims, wherein the surface plate (3) is combined with a rolling plane (6), where the bars roll, in its turn defined by only one surface or a plurality of supports, to force the bars to stop, after they initially rolled, in a position of stable equilibrium on the surface plate, the lying plane of the longitudinal axis of each bar being parallel to the surface plate itself, so that the straightness error of each bar lies coplanar with the surface plate.

7. Device according to one of the preceding claims, arranged in line with a bar production plant, wherein the controlling and processing unit (5) interfaces with said production plant in order to feedback adjust the production parameters on the basis of the straightness error each time detected on the bars.

8. Measuring method to measure straightness errors of elongated-shape elements, named bars, with a device according to one of the preceding claims 1-7, the measuring method comprising the steps of:
a) positioning a bar on the surface plate (3) so that to be arranged in a position of static equilibrium and that its longitudinal axis lies on a plane parallel to the surface plate itself;
b) detecting, through detecting means, comprising one or more sensors, positioned on the opposite side with respect to the surface plate, the coordinates of a plurality of points of the surface of the bar of each of at least three cross sections thereof; and
c) calculating the coordinates of the longitudinal axis of the bar next to said at least three cross sections, on the basis of the detection of step b);
d) interpolating the coordinates of the axis calculated in step c) to determine the straightness error of the bar as an axis offset from one or more reference lines.

9. Measuring method according to claim 8, wherein the surface plate is associated with a Cartesian reference system X, Z and
- in step b), acquiring the coordinates X, Y of a plurality of points (P₁, P₂, ., Pₙ) of the bar surface, in each of at least three sections (Z₁, Z₂, ... Zₙ) along the axis Z, is provided;
- in step c), carrying out a least-squares interpolation of coordinates of points (P₁, P₂, ., Pₙ) and comparing them with a bar reference model to determine the coordinates (X_{c}, Y_{c}) of the center of each cross section (Z₁, Z₂, ... Zₙ), i.e. the position of the bar axis in at least three cross sections, are provided;
- in step d), calculating the straightness error as a distance between two parallel lines, one of them passing through the centers of two cross sections and the other one passing through the center, in-between the preceding two centers, of a third cross section, is provided.

10. Measuring method according to claim 8 or 9, wherein the detecting means are stationary optical sensors or optical sensors movable along the axis Z next to at least three different bar sections.

11. Measuring method according to one of claims 8-10, wherein data relative to the straightness error each time detected on the bars, are sent to a bar production plant in order to feedback adjust the production parameters.

12. Measuring method according to one of claims 8-11, wherein the bars are classified on the basis of the amount of the measured straightness error and, in case, they are unloaded from the surface plate on different lines on the basis of the error amount.

## Patentansprüche

1. Messvorrichtung (1) zum Messen der Geradheitsfehler von Elementen mit länglicher Form (2), so genannten Stangen, mit einer Oberflächenplatte (3), auf der eine Stange im statischen Gleichgewicht angeordnet ist, Erfassungsmitteln (4) zum Erfassen der Abwicklung der Längsachse der Stange, einer Steuer- und Verarbeitungseinheit (5) zum Steuern und Verarbeiten der von den Erfassungsmitteln erfassten Daten,
wobei die Erfassungsmittel (4) einen oder mehrere Sensoren umfassen, um die Koordinaten einer Vielzahl von Punkten (P₁, P₂, ., Pₙ) der Stangenoberfläche von jedem der mindestens drei Querschnitten (Z₁, Z₂, ., Zₙ) zu erfassen, und die Steuer- und Verarbeitungseinheit (5) dafür programmiert ist, die Position der Längsachse der Stange im Bereich der drei Querschnitte ausgehend von den Koordinaten der Vielzahl von Punkten zu berechnen und den möglichen Geradheitsfehler zu bestimmen,
**dadurch gekennzeichnet, dass** die Oberflächenplatte (3) mindestens zwei Halterungen (S) umfasst, die jeweils auf einem entsprechenden Drehpunkt (F) schwenkbar montiert sind und mindestens zwei Lagerelemente (A1, A2) auf gegenüberliegenden Seiten in Bezug auf den jeweiligen Drehpunkt (F) aufweisen, um die statische Verformung der Stange, die durch ihr Eigengewicht verursacht wird, zu minimieren.

2. Messvorrichtung nach Anspruch 1, wobei die Erfassungsmittel (4) umfassen:
- mindestens einen optischen Sensor und Mittel, um diesen im Bereich von mindestens drei verschiedenen Querschnitten der Stange entlang seiner Längsachse zu positionieren; oder
- mindestens drei optische Sensoren, die jeweils im Bereich eines anderen Querschnitts der Stange entlang ihrer Längsachse angeordnet sind, wobei die Sensoren stationär oder in einer Richtung im Wesentlichen parallel zur Längsachse der Stange beweglich sind.

3. Vorrichtung nach Anspruch 1 oder 2, wobei die optischen Sensoren, die das zweidimensionale und/oder dreidimensionale geometrische Profil der Stange erfassen, ausgewählt sind aus: optischen Triangulations-Lasersensoren, Messsensoren, die strukturiertes Licht projizieren, Flugzeitkameras und stereoskopischen Sichtsystemen.

4. Vorrichtung nach einem der vorhergehenden Ansprüche, mit Bewegungsmitteln zum Bewegen von Sensoren, die ihrerseits umfassen:
mindestens eine Bahn (8), entlang der die beweglichen Sensoren verfahrbar sind, und
- Aktoren (10), die von der Steuereinheit angetrieben werden und für die Bewegung der beweglichen Sensoren in bekannte Positionen entlang der Bahn vorgesehen sind.

5. Vorrichtung nach einem der vorhergehenden Ansprüche, wobei jeder Halterung der Oberflächenplatte (3) erste Bewegungsmittel (M1) zugeordnet sind zur Änderung des Abstandes zwischen den Halterungen (S) und wobei den Lagerelementen jeder Halterung jeweils zweite Bewegungsmittel (M2) zugeordnet sind zur Änderung des Abstandes zwischen jedem Lagerelement und dem jeweiligen Drehpunkt, wobei die ersten und zweiten Bewegungsmittel (M1, M2) durch Programmmittel gesteuert werden, um den Abstand zwischen den Halterungen (S) bzw. den Abstand der Lagerelemente (A1, A2) bezüglich des jeweiligen Drehpunkts (F) auf der Basis der Dimensionsmerkmale der Stange zu verändern.

6. Vorrichtung nach einem der vorhergehenden Ansprüche, wobei der Oberflächenplatte (3) ein Rollgang (6) zugeordnet ist, auf dem die Stangen abrollen, der seinerseits durch nur eine Fläche oder eine Mehrzahl von Halterungen definiert ist, um die Stangen zu zwingen, nach ihrem anfänglichen Abrollen in einer stabilen Gleichgewichtslage auf der Oberflächenplatte anzuhalten, wobei die Lageebene der Längsachse jeder Stange parallel zu der Oberflächenplatte selbst ist, so dass der Geradheitsfehler jeder Stange koplanar mit der Oberflächenplatte liegt.

7. Vorrichtung nach einem der vorhergehenden Ansprüche, die in Linie mit einer Stangenproduktionsanlage angeordnet ist, wobei die Steuer- und Verarbeitungseinheit (5) mit der Produktionsanlage über eine Schnittstelle verbunden ist, um die Produktionsparameter auf der Basis des jeweils an den Stangen erfassten Geradheitsfehlers rückwirkend anzupassen.

8. Messmethode zum Messen der Geradheitsfehler von Elementen mit länglicher Form, den sogenannten Stangen, mit einer Vorrichtung nach einem der vorhergehenden Ansprüche 1 bis 7, wobei die Messmethode die folgenden Schritte umfasst:
a) Positionieren einer Stange auf der Oberflächenplatte (3), so dass sie in einer statischen Gleichgewichtslage angeordnet ist und ihre Längsachse auf einer Ebene parallel zur Oberflächenplatte selbst liegt;
b) Erfassen der Koordinaten einer Vielzahl von Punkten der Oberfläche der Stange von jedem der mindestens drei Querschnitte derselben durch Erfassungsmittel, die einen oder mehrere Sensoren umfassen, die auf der gegenüberliegenden Seite in Bezug auf die Oberflächenplatte positioniert sind; und
c) Berechnen der Koordinaten der Längsachse der Stange im Bereich der mindestens drei Querschnitte auf der Basis der Erfassung von Schritt b);
d) Interpolieren der in Schritt c) berechneten Koordinaten der Achse, um den Geradheitsfehler der Stange als Achsversatz von einer oder mehreren Referenzlinien zu bestimmen.

9. Messmethode nach Anspruch 8, wobei der Oberflächenplatte ein kartesisches Bezugssystem X, Z zugeordnet ist und
- in Schritt b) das Erfassen der Koordinaten X, Y einer Vielzahl von Punkten (P₁, P₂, ., Pₙ) der Stangenoberfläche in jedem der mindestens drei Querschnitte (Z₁, Z₂, . Zₙ) entlang der Achse Z vorgesehen ist;
- in Schritt c) die Durchführung einer Interpolation der Koordinaten von Punkten (P₁, P₂, ., Pₙ) nach der Methode der kleinsten Quadrate und deren Vergleich mit einem Stangenreferenzmodell vorgesehen ist, um die Koordinaten (X_{c}, Y_{c}) der Mitte jedes Querschnitts (Z₁, Z₂, . Zₙ), d.h. die Position der Stangenachse in mindestens drei Querschnitten, zu bestimmen;
- in Schritt d) die Berechnung des Geradheitsfehlers als Abstand zwischen zwei Parallellinien vorgesehen ist, von denen eine durch die Mittelpunkte von zwei Querschnitten und die andere durch den mittig zwischen den beiden vorhergehenden Mittelpunkten liegenden Mittelpunkt eines dritten Querschnitts verläuft.

10. Messmethode nach Anspruch 8 oder 9, wobei die Erfassungsmittel ortsfeste optische Sensoren oder entlang der Achse Z bewegliche optische Sensoren im Bereich von mindestens drei verschiedenen Stangenquerschnitten sind.

11. Messmethode nach einem der Ansprüche 8 bis 10, wobei Daten bezüglich des Geradheitsfehlers, die jederzeit an den Stangen erfasst werden, an eine Stangenproduktionsanlage übermittelt werden, um die Produktionsparameter rückwirkend anzupassen.

12. Messmethode nach einem der Ansprüche 8 bis 11, wobei die Stangen aufgrund des Betrages des gemessenen Geradheitsfehlers eingestuft und ggf. aufgrund des Fehlerbetrages von der Oberflächenplatte auf unterschiedlichen Linien ausgeladen werden.

## Revendications

1. Dispositif de mesure (1) pour mesurer les erreurs de rectitude des éléments de forme allongée (2), appelés barres, comprenant une plaque à dresser (3) sur laquelle une barre est disposée en équilibre statique, des moyens de détection (4) pour détecter le développement de l'axe longitudinal de la barre, une unité de commande et de traitement (5) pour contrôler et traiter les données acquises par lesdits moyens de détection,
dans lequel lesdits moyens de détections (4) comprennent un ou plusieurs capteurs pour acquérir les coordonnées d'une pluralité de points (P₁, P₂, .., Pₙ) de la surface de la barre de chacune d'au moins trois sections transversales (Z₁, Z₂, .., Zₙ) et ladite unité de commande et de traitement (5) étant programmée pour calculer la position de l'axe longitudinal de la barre près de ces trois sections, à partir des coordonnées de ladite pluralité de points, et pour déterminer l'éventuelle erreur de rectitude,
**caractérisé en ce que** la plaque à dresser (3) comprend au moins deux supports (S), chacun installés sur un point d'appui respectif (F) de sorte à osciller et ayant au moins deux éléments porteurs (A1, A2) sur des côtés opposés par rapport au moins d'appui respectif (F) pour minimiser la déformation statique de la barre causée par son propre poids.

2. Dispositif de mesure selon la revendication 1, dans lequel les moyens de détection (4) comprennent:
- au moins un capteur optique et des moyens pour le positionner près d'au moins trois différentes sections de la barre le long de son axe longitudinal; ou
- au moins trois capteurs optiques, chacun disposé près d'une section différente de la barre le long de son axe longitudinal, lesdits capteurs étant stationnaires ou mobiles dans une direction sensiblement parallèle à l'axe longitudinal de la barre.

3. Dispositif selon la revendication 1 ou 2, dans lequel les capteurs optiques détectant le profil géométrique bidimensionnel et/ou tridimensionnel de la barre sont sélectionnés parmi: des capteurs laser à triangulation optique, des capteurs de mesure projetant une lumière structurée, des caméras de temps de vol et des systèmes de vision stéréoscopique.

4. Dispositif selon l'une des revendications précédentes, comprenant des moyens de déplacement pour déplacer les capteurs qui à leur tour comprennent:
au moins une voie (8) le long de laquelle les capteurs mobiles peuvent être translatés, et
- des actionneurs (10) entraînés par l'unité de commande et destinés au déplacement des capteurs mobiles vers des positions connues le long de la voie.

5. Dispositif selon l'une des revendications précédentes, dans lequel chaque support de la plaque à dresser (3) est associé avec des premiers moyens de déplacement (M1) de sorte à faire varier la distance entre les supports (S) et dans lequel les éléments porteurs de chaque support sont associés avec des seconds moyens de déplacement respectifs (M2) de sorte à faire varier la distance entre chaque élément porteur et le point d'appui respectif, lesdits premiers et seconds moyens de déplacement (M1, M2) étant contrôlés par des moyens de programmation de sorte à faire varier respectivement la distance entre les supports (s) et la distance entre les éléments porteurs (A1, A2) par rapport au point d'appui respectif (F) en fonction des caractéristiques dimensionnelles de la barre.

6. Dispositif selon l'une des revendications précédentes, dans lequel la plaque à dresser (3) est associée avec un plan de roulement (6), où les barres roulent, à son tour définit par une seule surface ou par une pluralité de supports de sorte à forcer les barres à s'arrêter, après avoir initialement roulé, dans une position d'équilibre stable sur la plaque à dresser, le plan couché de l'axe longitudinal de chaque barre étant parallèle à la plaque à dresser elle-même, de sorte que l'erreur de rectitude de chaque barre se trouve coplanaire avec la plaque à dresser.

7. Dispositif selon l'une des revendications précédentes, disposé en ligne avec une installation de production de barres, dans lequel l'unité de commande et de traitement (5) est interfacée avec ladite installation de production de sorte à ajuster en rétroaction les paramètres de production en fonction de l'erreur de rectitude de temps en temps détectée sur les barres.

8. Méthode de mesure pour mesurer les erreurs de rectitude d'éléments de forme allongée, appelés barres, avec un dispositif selon l'une des revendications précédentes 1-7, la méthode de mesure comprenant les étapes de:
a) positionner une barre sur la plaque à dresser (3) de sorte à être disposée dans une position d'équilibre statique et que son axe longitudinal se trouve sur un plan parallèle à la plaque à dresser elle-même;
b) détecter, à travers des moyens de détection, comprenant un ou plusieurs capteurs, positionnés sur le côté opposé par rapport à la plaque à dresser, les coordonnées d'une pluralité de points de la surface de la barre de chacune de ses trois sections transversales; et
c) calculer les coordonnées de l'axe longitudinal de la barre près desdites au moins trois sections transversale en fonction de l'étape de détection b);
d) interpoler les coordonnées de l'axe calculées dans l'étape c) pour déterminer l'erreur de rectitude de la barre comme décalage de l'axe par rapport à une ou plusieurs lignes de référence.

9. Méthode de mesure selon la revendication 8, dans laquelle la plaque à dresser est associée avec un système de référence Cartésien X, Z et
- dans l'étape b), acquérir les coordonnées X, Y d'une pluralité de points (P₁, P₂, .., Pₙ) de la surface de la barre, dans chacune des au moins trois sections (Z₁, Z₂, .., Zₙ) le long de l'axe Z, étant prévu;
- dans l'étape c), effectuer une interpolation aux moindres carrés des coordonnées des points (P₁, P₂, .., Pₙ) et les comparer avec un modèle de barre de référence de la barre pour déterminer les coordonnées (X_{c}, Y_{c}) du centre de chaque section transversale (Z₁, Z₂, .. Zₙ), c.à.d. la position de l'axe de la barre dans au moins trois sections transversales, étant prévus;
- dans l'étape d), calculer l'erreur de rectitude comme distance entre deux lignes parallèles, l'une d'elle passant à travers les centres de deux sections transversales et l'autre passant à travers le centre, entre les deux centres précédents, d'une troisième section transversale, étant prévu.

10. Méthode de mesure selon la revendication 8 ou 9, dans laquelle les moyens de détection sont des capteurs optiques stationnaires ou des capteurs optiques pouvant se déplacer le long de l'axe Z près d'au moins trois différentes sections de la barre.

11. Méthode de mesure selon l'une des revendications 8-10, dans laquelle les données relatives à l'erreur de rectitude, à chaque fois détectées sur les barres, sont envoyées à une installation de production de barres de sorte à régler en rétroaction les paramètres de production.

12. Méthode de mesure selon l'une des revendications 8-11, dans laquelle les barres sont classifiées en fonction de l'amplitude de l'erreur de rectitude et, le cas échéant, sont déchargées de la plaque à dresser sur différentes lignes en fonction de l'amplitude de l'erreur.
